# EUROPEAN PATENT APPLICATION

(11) **EP 1 800 540 A2**
(43) Date of publication of application: **27.06.2007**
(21) Application number: 06256569.2
(22) Date of filing: 22.12.2006
(51) Int. Cl.: A01N 35/02, A01N 31/08, A01P 1/00

(54) **Disinfectant composition**

(30) Priority: 23.12.2005 GB 0526425
(71) Applicant: Perth Laboratories Limited, Silsoe Bedford MK45 4EF (GB)
(72) Inventor: Clark, David, Iluka, 6028 Perth, Western Australia (AU)
(74) Representative: O'Brien, Niall James

(57) **Abstract**

The present invention relates to a disinfectant composition comprising a glutaraldehyde, and a combination of more than one different phenolic compound. The composition of the present invention is particularly effective as a a bactericide, fungicide, a virucide, a tuberculocide or a pseudomonacide.

## Description

The present invention relates to a disinfectant composition. More particularly, the invention relates to a disinfectant composition for the treatment of bacteria such as Methicillin Resistant *Staphylococcus Aureus* (MRSA), in locations where hygiene is of particular importance, e.g. hospitals.

There have been many formulations, developed for antiseptic and germicidal cleaning purposes, but each in the prior art has had some limitations as to the applications. For some, the limitation has been the extent to which they could successfully disinfect.

For others the limitation has been the extent to which they could consistently sterilize. Still others were limited because of the toxic effect on the skin or other organs of the user. Other compositions were limited because of their corroding effect on metal, such as spotting or tarnishing.

Of particular note is the fact that in the prior art the use of glutaraldehyde has usually been in the alkaline form. The prior art disinfectants in the alkaline solutions tend to leave a residue in the more concentrated forms. This could be an irritant. Several rinses may be required to remove the slippery residue.

In addition, in prior art formulations which use glutaraldehydes in the alkaline form there are a number of additional disadvantages. Some of these disadvantages are: they need to be activated using a special solution or powder; once activated, they have a limited life of one to four weeks and then must be disposed of entirely; the compositions, which are normally activated in approximate amounts of a litre, are uneconomical if not used because they are dated at time of activation and must be discarded; the solution turns skin yellow on prolonged contact due to a tanning action; they often have a disagreeable odour; they are corrosive, and polymerise easily if acidic thereby losing their potency.

EP 0 279 704 discloses a disinfectant composition containing glutaraldehyde and phenol. DE 4317844 discloses a disinfectant composition containing glutaraldehyde and 2-phenyl-phenol and/or p-chloro-m-cresol. EP0 255 875 discloses a disinfectant composition, comprising glutaraldehyde, alkyl-, aryl-, or halogen-substituted phenol or thiobisphenol, and a nonionic surface-active agent. US 4 103 001 teaches the use of a buffering agent to obtain a glutaraldehyde-phenol disinfectant composition stable at basic pH ranges.

CA 2 015 079 discloses a formulation based upon glutaraldehyde and a combination of phenols. The formulation requires a high concentration of glutaraldehyde which can result in odour and corrosion problems. The formulation further requires the addition of sodium arylalkysulfonate which acts as a surfactant and corrosion inhibitor. There is also the possibility of allergic reactions to such a concentration of glutaraldehyde.

In the present invention the use of glutaraldehyde is in the acid form. In known formulations the use of acidic glutaraldehyde results in side-reactions such as polymerisation with a resultant reduction in effectiveness.

In the present invention, the acid form of the glutaraldehyde needs no activation and has a shelf life of two years. The solution of the present invention is typically provided in the form in which it is to be used. Although the composition can be provided in more concentrated form for dilution prior to use if needed.

The present invention is particularly effective against bacteria, such as MRSA, or viruses, such as influenza.

According to a first aspect of the present invention there is provided a disinfectant composition comprising a glutaraldehyde, and a combination of more than one different phenolic compound.

Typically the composition comprises two different phenolic compounds.

The amount of glutaraldehyde is preferably 0.25-0.33%wt/wt.

The combined amount of phenol compounds is preferably 0.015-0.0196%wt/wt. Preferred ranges for each phenol compound are 0.0125-0.0163%wt/wt, and 0.02-0.0033%wt/wt respectively.

In a preferred composition the amount of each component is as follows: glutaraldehyde - 0.25%, o-phenyl phenol - 0.0125%, and p-*tert*-amyl phenol - 0.0025%.

In a further preferred composition the amount of each component is as follows: glutaraldehyde - 0.25%, o-phenyl phenol - 0.0125%, and o-benzyl-p-chlorophenol - 0.0025%.

In a yet further preferred composition the amount of each component is as follows: glutaraldehyde - 0.25%, o-phenyl phenol - 0.0125%, and o-benzyl-p-chlorophenol - 0.02%.

The composition typically also comprises a surfactant, and may further comprise other suitable materials such as a colourant and/or a fragrancing agent.

The pH of the composition is preferably acidic, and more preferably 5.00-6.00.

Typically, the composition would be used in the form of a spray. However, the composition may be used in any suitable manner, e.g by application with a cloth of application or as the active ingredient in a gel.

The composition can be used as a bactericide, fungicide, a virucide, a tuberculocide or a pseudomonacide. The composition is particularly effective against Staphylococcus aureus and other strains thereof such as MRSA, Salmonella choleraesuis, Pseudomonas aeruginosa, Trichophyton mentagropnytes, Mycobacterium tuberculosis, Herpes Simplex Virus 1 & 2, Influenza A²HK, Coxsacxievirus B5a, Adenovirus-2, Poliovirus 1 & 2, Rotavirus SA-11, Rhinovirus, Vaccinia virus, Cytomegavirus, Respiratory syncytial virus and HIV-1 (AIDS virus), e-coli, vancomycin-resistant enterococci (VRE), multi-resistant Acinetobacher baumannii (MRAB), severe acute respiratory syndrome (SARS). More particularly the composition is effective against MRSA 15 and 16.

According to a second aspect of the present invention there is provided a use of a composition as defined in the first aspect of the invention for disinfecting a surface.

Typically the use is as a bactericide, fungicide, a virucide, a tuberculocide or a pseudomonacide. The composition is particularly effective against Staphylococcus aureus and other strains thereof such as MRSA, Salmonella choleraesuis, Pseudomonas aeruginosa, Trichophyton mentagropnytes, Mycobacterium tuberculosis, Herpes Simplex Virus 1 & 2, Influenza A²HK, Coxsacxievirus B5a, Adenovirus-2, Poliovirus 1 & 2, Rotavirus SA-11, Rhinovirus, Vaccinia virus, Cytomegavirus, Respiratory syncytial virus and HIV-1 (AIDS virus), e-coli, vancomycin-resistant enterococci (VRE), multi-resistant Acinetobacher baumannii (MRAB), severe acute respiratory syndrome (SARS). More particularly the composition is effective against MRSA 15 and 16.

Embodiment of the present invention will now be described by way of example only and with reference to the accompanying Figures, in which:
Figure 1 illustrates a table of results obtained by testing Example 1 of the composition against several different types of bacteria; and
Figure 2 illustrates a table of results obtained by testing Example 1 of the composition against several different strains of MRSA.

An example of the composition can be manufactured from the following components:
Triton H-66
Tergitol 15-S-9
o-Phenyl phenol (Trade Name - Dowicide 1)
Peppermint Oil
Propan-2-ol (Reagent grade)
Sodium Ctirate (Food grade)
Citric Acid (Food grade)
p-*tert*-Amyl -phenol
Blue Dye
Glutaraldehyde (High grade)

In a particular embodiment (Example 1) a 1I aqueous solution of the composition comprises the components in the following amounts:

| | |
|---|---|
| Triton H-66 | 0.006g |
| Tergitol 15-S-9 | 0.006g |
| Dowicide 1 | 0.125g |
| Peppermint Oil | 0.25ml |
| Propan-2-ol (Reagent grade) | 0.073g |
| Sodium Ctirate (Food grade) | 0.820g |
| Citric Acid (Food grade) | 0.365g |
| p-tert-Amyl-phenol | 0.025g |
| Blue Dye | 0.004g |
| Glutaraldehyde (High grade) | 2.5g |

The composition can be manufactured by dissolving the p-tert amyl phenol and Dowicide 1 in propan-2-ol, and covering with a tight fitting lid. This mixture is left to dissolve overnight or for several hours. The solids will dissolve without mixing, but if they are mixed they should dissolve more quickly. When the solids have dissolved, the alcoholic phase is thoroughly mixed prior to use.

Triton H-66 and Tergitol 15-S-9 are then measured into a suitable mixing vessel, the peppermint flavour and protectol GA are added together with one fifth of the final volume of purified water. The alcoholic phase is added and allowed to fully mix.

The colouring, sodium citrate and citric acid are then added, mixed thoroughly and allowed to dissolve. The volume is made up with purified water. The resulting solution is mixed again and then filtered into 500ml trigger sprays.

The pH is maintained within the range 5 - 6. This is done using either citric acid or sodium citrate.

The final product is a blue or clear solution having a ph of 5.00-6.00, a specific gravity of >1.00 and a peppermint odour.

Alternative embodiments of the composition of the present invention are as follows:
Example 2

| | |
|---|---|
| Triton H-66 | 0.006g |
| Tergitol 15-S-9 | 0.006g |
| Dowicide 1 | 0.125g |
| Peppermint Oil | 0.25ml |
| Propan-2-ol (Reagent grade) | 0.073g |
| Sodium Ctirate (Food grade) | 0.820g |
| Citric Acid (Food grade) | 0.365g |
| o-benzyl-p-ch loro-phenol | 0.025g |
| Blue Dye | 0.004g |
| Glutaraldehyde (High grade) | 2.5g |

Example 3

| | |
|---|---|
| Triton H-66 | 0.006g |
| Tergitol 15-S-9 | 0.006g |
| Dowicide 1 | 0.125g |
| Peppermint Oil | 0.25ml |
| Propan-2-ol (Reagent grade) | 0.073g |
| Sodium Ctirate (Food grade) | 0.820g |
| Citric Acid (Food grade) | 0.365g |
| o-benzyl-p-chloro-phenol | 0.200g |
| Blue Dye | 0.004g |
| Glutaraldehyde (High grade) | 2.5g |

The embodiments of Examples 2 and 3 can be prepared using the same procedure as Example 1. In both Examples 2 and 3 water is used to make up the desired volume.

The compositions are bactericidal, fungicidal, virucidal, tuberculocidal and pseumonacidal. Vegetative bacteria are killed within 10 minutes and viruses are inactivated within 2 minutes. The following results have also been obtained:

Staphylococcus aureus and strains (MRSA), Salmonella choleraesuis, Pseudomonas aeruginosa and Trichophyton mentagropnytes are all killed within 10 minutes at 20°C.

Mycobacterium tuberculosis is inactivated in 15 minutes at room temperature.

Herpes Simplex Virus 1 & 2 and Influenza A²HK is inactivated in 30 seconds at room temperature.

Coxsacxievirus B5a, Adenovirus-2, Poliovirus 1 & 2, Rotavirus SA-11, Rhinovirus, Vaccinia virus, Cytomegavirus and Respiratory syncytial virus are all inactivated within 2 minutes at 20°C.

HIV-1 (AIDS virus) is inactivated in 30 seconds at room temperature.

Example 3 was tested against MRSA 13196, and passed BSEN 13697 with a log 5.5 reduction and a 99.999% kill.

Typically, the composition would be applied in the form of a spray. The spray is applied directly onto a surface or object to be cleaned, and wiped away using any suitable means.

The composition can be re-applied if necessary, although this would not be essential in order to achieve the desired effect.

The composition is compatible with all types of surface, e.g. vinyl, plastic, metal and non-porous hard surfaces.

The composition can be used to disinfect the surfaces of laboratories, doctor's/vet's/dentist's surgeries, hospitals, any any oter suitable industrial, commercial or agriculture centre.

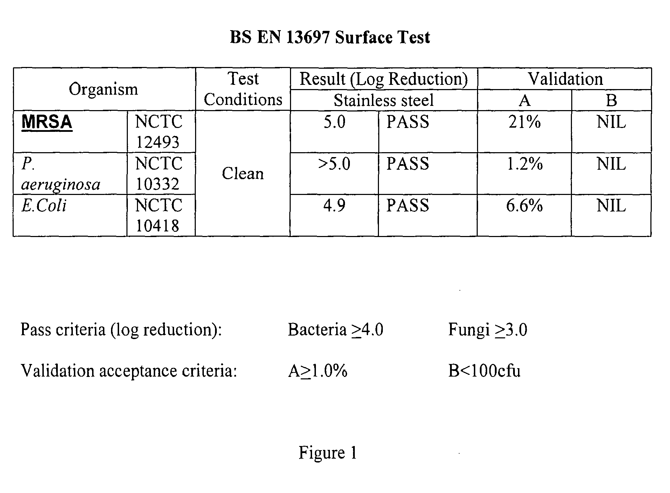

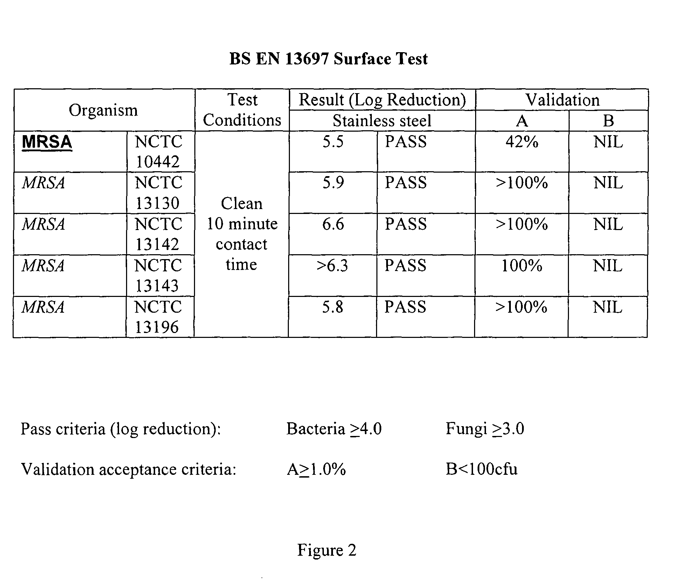

The results shown in the tables in Figures 1 and 2 illustrate the effectiveness of the composition. Typically, the composition was shown to be effective in tests conducted over a period of ten minutes.

One advantage of the composition of the present invention is that it is a water-based product and therefore will not evaporate as quickly as known alcohol based products from the surface to which it is applied.

In addition, a single application of the composition provides effective disinfection of a surface.

Further modifications and improvements may be incorporated without departing from the scope of the invention herein described.

## Claims

1. A disinfectant composition comprising a glutaraldehyde, and a combination of more than one different phenolic compound.

2. A disinfectant composition as claimed in Claim 1 wherein said composition comprises two different phenolic compounds.

3. A disinfectant composition as claimed either Claim 1 or Claim 2 wherein the amount of glutaraldehyde is 0.25-0.33%wt/wt.

4. A disinfectant composition as claimed in any of the preceding Claims wherein the combined amount of phenol compounds is 0.0158-0.0363%wt/wt.

5. A disinfectant composition as claimed in Claim 4 wherein the ranges for each phenol compound are 0.0125-0.0163%wt/wt, and 0.02-0.0033%wt/wt respectively.

6. A disinfectant composition as claimed in any of the preceding Claims wherein the amount of each component is as follows: glutaraldehyde - 0.25%, o-phenyl phenol - 0.0125%, and p-*tert*-amyl phenol - 0.0025%.

7. A disinfectant composition as claimed in any of Claims 1-5 wherein the amount of each component is as follows: glutaraldehyde - 0.25%, o-phenyl phenol - 0.0125%, and o-benzyl-p-chlorophenol - 0.0025%.

8. A disinfectant composition as claimed in any of Claims 1-5 wherein the amount of each component is as follows: glutaraldehyde - 0.25%, o-phenyl phenol - 0.0125%, and o-benzyl-p-chlorophenol - 0.02%.

9. A disinfectant composition as claimed in any of the preceding Claims wherein the composition also comprises a surfactant.

10. A disinfectant composition as claimed in any of the preceding Claims wherein further comprise other suitable materials such as a colourant and/or a fragrancing agent.

11. A disinfectant composition as claimed in any of the preceding Claims wherein the pH of the composition is acidic.

12. A disinfectant composition as claimed in any of the preceding Claims wherein the pH is 5.00-6.00.

13. A disinfectant composition as claimed in any of the preceding Claims wherein the composition is used in the form of a spray.

14. A disinfectant composition as claimed in any of Claims 1-12 wherein the composition is used by application with a cloth of application or as the active ingredient in a gel.

15. A disinfectant composition as claimed in any of the preceding Claims wherein the composition is used as a bactericide, fungicide, a virucide, a tuberculocide or a pseudomonacide.

16. A disinfectant composition as claimed in Claim 15 wherein composition is used against Staphylococcus aureus and other strains thereof such as MRSA, Salmonella choleraesuis, Pseudomonas aeruginosa, Trichophyton mentagropnytes, Mycobacterium tuberculosis, Herpes Simplex Virus 1 & 2, Influenza A²HK, Coxsacxievirus B5a, Adenovirus-2, Poliovirus 1 & 2, Rotavirus SA-11, Rhinovirus, Vaccinia virus, Cytomegavirus, Respiratory syncytial virus and HIV-1 (AIDS virus), e-coli, vancomycin-resistant enterococci (VRE), multi-resistant Acinetobacher baumannii (MRAB), severe acute respiratory syndrome (SARS).

17. A disinfectant composition as claimed in Claim 16 wherein the composition is used against MRSA 15 and 16.

18. A use of a composition as defined in any of Claims 1-14 for disinfecting a surface.

19. The use as claimed in Claim 18 wherein the use is as a bactericide, fungicide, a virucide, a tuberculocide or a pseudomonacide.

20. The use as claimed in Claim 19 wherein the use is against Staphylococcus aureus and other strains thereof such as MRSA, Salmonella choleraesuis, Pseudomonas aeruginosa, Trichophyton mentagropnytes, Mycobacterium tuberculosis, Herpes Simplex Virus 1 & 2, Influenza A²HK, Coxsacxievirus B5a, Adenovirus-2, Poliovirus 1 & 2, Rotavirus SA-11, Rhinovirus, Vaccinia virus, Cytomegavirus, Respiratory syncytial virus and HIV-1 (AIDS virus), e-coli, vancomycin-resistant enterococci (VRE), multi-resistant Acinetobacher baumannii (MRAB), severe acute respiratory syndrome (SARS).

21. The use as claimed in Claim 20 wherein the use against MRSA 15 and 16.
